# EUROPEAN PATENT APPLICATION

(11) **EP 2 059 076 A1**
(43) Date of publication of application: **13.05.2009**
(21) Application number: 08165497.2
(22) Date of filing: 30.09.2008
(51) Int. Cl.: H04W 4/16

(54) **Method, system and apparatus for implementing conditional call forwarding**

(30) Priority: 06.11.2007 CN 200710166228
(71) Applicant: Huawei Technologies Co., Ltd., Longgang District, Shenzhen Guangdong 518129 (CN)
(72) Inventor: Tian, Yu, Shenzhen Guangdong 518129 (CN); Chen, Liang, Longgang District, Shenzhen Guangdong 518129518129 (CN)
(74) Representative: Thun, Clemens

(57) **Abstract**

The present invention relates to a method for implementing conditional call forwarding. The method includes: determining that cross-network roaming of a called party occurs currently by an optimal routing at conditional call forwarding (ORCCF) intelligent service subscribed by a mobile terminal, when determining that the called party satisfies a call forwarding condition; and releasing a speech path established between a calling party and the called party, and forwarding a call to a forwarded-to-number of the called party from the calling party. The present invention also relates to a system and an apparatus for implementing conditional call forwarding. Through the present invention, in conditional call forwarding services, a cross-network roaming fee charged for the call forwarding can be avoided when cross-network roaming of a called subscriber occurs.

## Description

### CROSS-REFERENCE TO RELATED APPLICATIONS

This application claims priority to Chinese Patent Application No. 200710166228.8, filed on November 6, 2007, entitled "Method, System and Apparatus for Implementing Conditional Call Forwarding", commonly assigned, incorporated by reference herein for all purposes.

### FIELD OF THE INVENTION

The present invention relates to a call forwarding technology, and more particularly to a method, a system, and an apparatus for implementing conditional call forwarding.

### BACKGROUND

A call forwarding service refers to a service to transfer an incoming call of a subscriber from one number to another designated number before the call is answered. There are conditional call forwarding services in the public land mobile network (PLMN) supporting customized applications for the mobile network enhanced logic (CAMEL), including call forwarding on mobile subscriber busy, call forwarding on no reply, call forwarding on mobile subscriber not reachable, etc.

In conditional call forwarding services, a forwarding operation is processed by a visited mobile switching center (VMSC). Assuming that the called subscriber is a subscriber b, when paging called of a VMSC where the subscriber b is located is encountered with the circumstance that the subscriber b is busy, no reply, or not reachable, the VMSC forwards the call to a forwarded-to-number of the subscriber b. The forwarded-to-number is generally a number of a domestic voice mailbox or a number of domestic public switched telephone network (PSTN). Generally, a procedure triggered by the calling subscriber as a calling party is referred to a mobile originated (MO) procedure, a procedure triggered by the called subscriber as a called party is referred to a mobile terminated (MT) procedure, and a procedure triggered by the called subscriber as a calling party, for example, the call forwarding occurs to the called party, is referred to a mobile forwarded (MF) procedure. The MF procedure may also be considered as a special MO procedure.

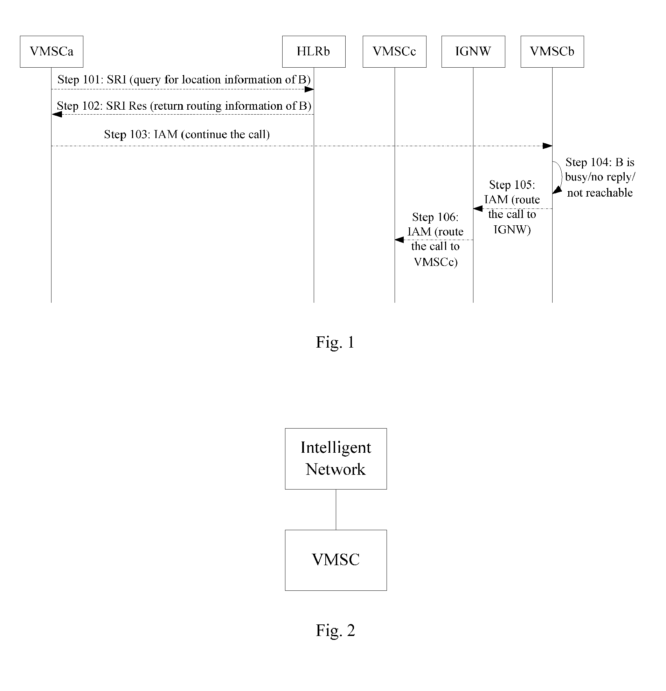

The above applications may refer to a case that the called subscriber and the forwarding subscriber are located in different operators' networks, and such a case is referred to as cross-network roaming. In this case, if a call is originated from the called subscriber to the forwarding subscriber due to a forwarding service, a high cross-network roaming fee is produced. In general case, international roaming is an example of the above cross-network roaming, and a brief illustration is given below by taking the international roaming as an example. If a called subscriber is in an international roaming state and a forwarding subscriber corresponding to the called subscriber is in domestic, conditional call forwarding is processed by a VMSC in a PLMN abroad. The PLMN abroad further includes an international gateway (INGW). FIG. 1 is a flow chart for implementing conditional call forwarding for a called subscriber in an international roaming state in the prior art. In FIG. 1, it is assumed that a subscriber a is the calling subscriber, and a VMSC corresponding to the subscriber a is represented by VMSCa; a subscriber b is the called subscriber, and a VMSC corresponding to the subscriber b is represented by VMSCb which is located in a PLMN abroad, and a home location register (HLR) of the called subscriber is represented by HLRb; a subscriber c is the forwarding subscriber corresponding to the called subscriber b, and a VMSC corresponding to the subscriber c is represented by VMSCc which is located in a domestic PLMN. Dash arrows indicate standard mobile application part (MAP) protocol interfaces, and dot-and-dash arrows indicate integrated services user part (ISUP) protocol interfaces of the standard integrated services digital network (ISDN).

The flow chart shown in FIG. 1 includes the following steps.

In Step 101 to Step 102, the VMSCa queries for location information of the called party from the HLRb, and the HLRb returns routing information of the called party.

In Step 103, the VMSCa routes the call to the VMSCb where the called party is currently located. Although an international speech path detour occurs in this step, no international roaming fee is charged for the moment since the call is not answered.

In Step 104, the VMSCb pages the called party, and finds out that the called party is busy, no reply, or not reachable.

In Step 105 to Step 106, the VMSCb obtains the forwarding subscriber c corresponding to the called party and routes the call to the VMSCc via the INGW. In this step, when the subscriber moves to a visited PLMN (VPLMN), i.e., the location thereof updates, an MSC in the VPLMN obtains information corresponding to the subscriber from the HLR of the subscriber. Therefore, the VMSCb may obtain the forwarding subscriber c corresponding to the called party.

The call based on the conditional call forwarding service is forwarded by the called subscriber b to the forwarding subscriber c and is answered after the forwarding subscriber c picks up the phone, and thus an international roaming fee is produced.

In view of the above, as for the conditional call forwarding services in the prior art, if the called subscribe and the forwarding subscriber are located in different operators' networks, i.e., a cross-network roaming occurs, a cross-network speech path detour occurs during the call forwarding processing, and a high cross-network roaming fee is charged after the call is answered, which brings an economic burden to the subscriber.

### SUMMARY

An embodiment of the present invention provides a method for implementing conditional call forwarding, which can avoid a roaming fee charged for the call forwarding processing when cross-network roaming of a called subscriber occurs in the conditional call forwarding services.

An embodiment of the present invention provides a system for implementing conditional call forwarding, which can avoid a roaming fee caused by the call forwarding processing when cross-network roaming of a called subscriber occurs in the conditional call forwarding services.

An embodiment of the present invention provides a visited mobile switching center (VMSC), which can avoid a roaming fee caused by the call forwarding processing when cross-network roaming of a called subscriber occurs in the conditional call forwarding services.

An embodiment of the present invention provides another VMSC, which can avoid a roaming fee caused by the call forwarding processing when cross-network roaming of a called subscriber occurs in the conditional call forwarding services.

The technical solutions of embodiments of the present invention are implemented as follows.

A method for implementing conditional call forwarding is provided, which includes the following steps.

When it is determined that a called party satisfies a call forwarding condition, an ORCCF intelligent service subscribed by the mobile terminal determines that cross-network roaming of the called party occurs currently; and

A speech path established between a calling party and the called party is released, and a call is forwarded to a forwarded-to-number of the called party from the calling party.

A system for implementing conditional call forwarding is provided, which includes an intelligent network, a VMSC of a called party, and a VMSC of a calling party.

The intelligent network is provided for a mobile terminal to subscribe an ORCCF intelligent service used for determining that cross-network roaming of a called party occurs;

The VMSC of the called party is adapted to determine that the called party satisfies a call forwarding condition, and release a speech path between the calling party and the called party once the ORCCF intelligent service determines that the cross-network roaming of the called party occurs; and

The VMSC of the calling party is adapted to forward a call to a forwarded-to-number of the called party after the VMSC of the called party releases the speech path established between the calling party and the called party.

A VMSC is provided, which includes a first service switch point (SSP), a visitor location register (VLR), and a first execution module.

The first SSP is adapted to trigger a mobile terminated (MT) procedure or a mobile originated (MO) procedure of an ORCCF intelligent service according to intelligent service subscription information received by the VLR;

The VLR is adapted to query for location information of a called party from a home location register (HLR) and receive routing information, the intelligent service subscription information, or conditional forwarding service information of the called party returned by the HLR; and

The first execution module is adapted to route a call to a VMSC of the called party according to the routing information of the called party received by the VLR, and forward the call to a VMSC of a forwarded-to-number of the called party, after the VMSC of the called party releases a speech path established between the calling party and the called party, according to the conditional forwarding service information of the called party received by the VLR.

A VMSC is provided, which includes a second SSP and a second execution module.

The second SSP is adapted to trigger an MO procedure of an ORCCF intelligent service and receive an instruction about releasing the call from the ORCCF intelligent service; and

The second execution module is adapted to release the call from a calling party to a called party according to the instruction received by the second SSP and determine that the called party satisfies a call forwarding condition.

In view of the above, in the method, the system, and the apparatus for implementing the conditional call forwarding according to the embodiments of the present invention, a mobile terminal subscribes an ORCCF intelligent service. When it is determined that a called party satisfies a call forwarding condition, the ORCCF intelligent service determines that cross-network roaming of the called party occurs. A speech path established between a calling party and the called party is released. A call is forwarded to a forwarded-to-number of the called party from the calling party. Therefore, the call is prevented from being directly routed to the forwarded-to-number when the called party satisfies the forwarding condition, so that the cross-network speech path detour for the cross-network roaming of the called party is avoided during the call forwarding, and no roaming fee is charged, thereby alleviating the economic burden of the subscriber.

### BRIEF DESCRIPTION OF THE DRAWING(S)

FIG. 1 is a flow chart for implementing conditional call forwarding when a called subscriber is in an international roaming state in the prior art;

FIG. 2 is a schematic diagram of a system for implementing conditional call forwarding according to an embodiment of the present invention;

FIG. 3 is a schematic diagram of a system for implementing conditional call forwarding in combination with a network architecture according to an embodiment of the present invention;

FIG. 4 is a flow chart of a method for implementing conditional call forwarding according to an embodiment of the present invention;

FIG. 5 is a flow chart of a method for implementing conditional call forwarding according to a first preferred embodiment of the present invention;

FIG. 6 is a flow chart of a method for implementing conditional call forwarding according to a second preferred embodiment of the present invention; and

FIG. 7 is a flow chart of a method for implementing conditional call forwarding according to a third preferred embodiment of the present invention.

### DETAILED DESCRIPTION

In order to make the objects and advantages of embodiments of the present invention more comprehensible, the embodiments of the present invention are illustrated below in further detail with reference to accompanying drawings.

In the embodiments of the present invention, all the mobile subscribers who apply for conditional supplementary services subscribe an optimal routing at conditional call forwarding (ORCCF) intelligent service in an intelligent network, so that a call control function is completed by the ORCCF intelligent service.

Firstly, a system for implementing conditional call forwarding according to an embodiment of the present invention is illustrated. FIG. 2 is a schematic diagram of the system. As shown in FIG. 2, the system includes an intelligent network and a visited mobile switching center (VMSC).

The intelligent network is provided for a mobile terminal to subscribe an ORCCF intelligent service. The ORCCF intelligent service is used to determine that cross-network roaming of a called party occurs.

A VMSC of the called party is adapted to determine that the called party satisfies a call forwarding condition, and release a speech path established between a calling party and the called party when the ORCCF intelligent service determines that the cross-network roaming of the called party occurs.

A VMSC of the calling party is adapted to forward a call to a forwarded-to-number of the called party after the VMSC of the called party releases the speech path established between the calling party and the called party.

In the system for implementing the conditional call forwarding according to an embodiment of the present invention, the mobile terminal subscribes the ORCCF intelligent service. When it is determined that the called party satisfies the call forwarding condition, the ORCCF intelligent service determines that the cross-network roaming of the called party occurs, the speech path established between the calling party and the called party is released, and the call is forwarded to the forwarded-to-number of the called party from the calling party. Therefore, the call is prevented from being directly routed to the forwarded-to-number when the called party satisfies the forwarding condition, so that the cross-network speech path detour for the cross-network roaming of the called party is avoided during the call forwarding, and no roaming fee is charged, thereby the economic burden of the subscribers is alleviated.

As a preferred embodiment, the above system may further include a home location register (HLR) adapted to store routing information, intelligent service subscription information and conditional forwarding service information of the mobile terminal.

In this case, the VMSC of the calling party includes a first service switch point (SSP), a visitor location register (VLR) and a first execution module.

The first SSP is adapted to trigger a mobile terminated (MT) procedure or a mobile originated (MO) procedure of the ORCCF intelligent service according to the intelligent service subscription information received by the VLR.

The VLR is adapted to query for location information of the called party from the HLR and receive the routing information, the intelligent service subscription information, or the conditional forwarding service information of the called party returned by the HLR.

The first execution module is adapted to route the call to the VMSC of the called party according to the routing information of the called party received by the VLR, and forward the call to the called party to a VMSC of the forwarded-to-number of the called party from the calling party, after the VMSC of the called party releases the speech path established between the calling party and the called party, according to the conditional forwarding service information of the called party received by the VLR.

The VMSC of the called party includes a second SSP and a second execution module.

The second SSP is adapted to trigger the MO procedure of the ORCCF intelligent service and receive an instruction about releasing the call from the ORCCF intelligent service.

The second execution module is adapted to release the call according to the instruction received by the second SSP and determine that the called party satisfies the call forwarding condition.

The VMSC of the called party further includes a reporting module adapted to report information including the forwarded-to-number to the ORCCF intelligent service during the MO procedure triggered by the second SSP.

As another preferred embodiment, the above system further includes an HLR adapted to store the routing information, the intelligent service subscription information, and the conditional forwarding service information of the mobile terminal, receive an query for location information of the called party made by the VMSC of the calling party, and return directly the routing information of the called party to the VMSC of the calling party when it is determined that the cross-network roaming of the called party does not occur.

In the system according to an embodiment of the present invention, the VMSC of the called party and the VMSC of the calling party may be respectively taken as preferred embodiments of two types of VMSCs providing by an embodiment of the present invention.

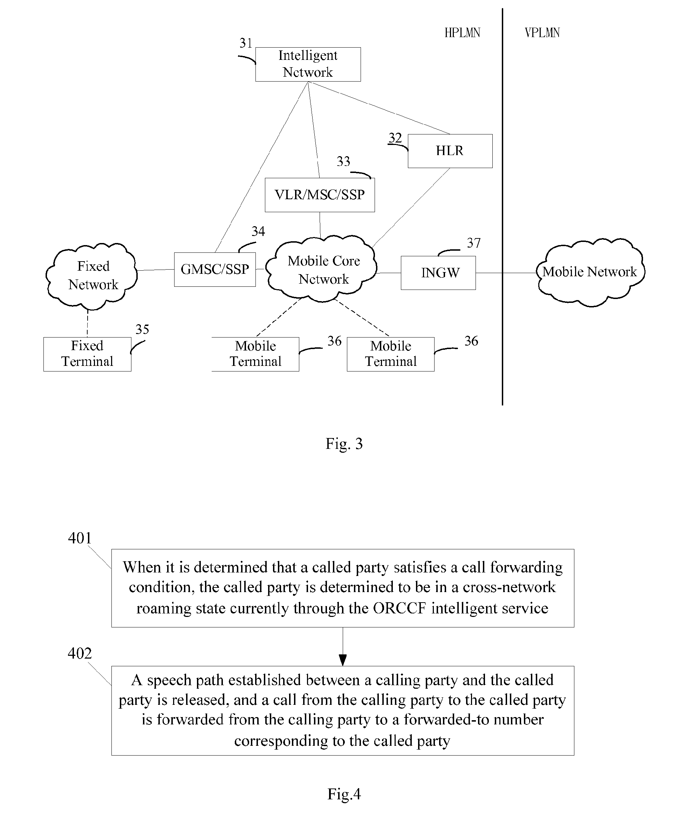

FIG. 3 is a schematic diagram of a system in combination with a network architecture according to an embodiment of the present invention, in which an international roaming is taken as a specific example of the cross-network roaming. As shown in FIG. 3, HPLMN indicates a national area and VPLMN indicates an international area. FIG. 3 is briefly described below with reference to the network architecture.

An intelligent network 31 executes intelligent service logics and completes a call control function, in which an ORCCF intelligent service is provided for subscribing by a mobile terminal.

An HLR 32 serves as a central database of a mobile network system for storing data relevant to all the mobile terminals controlled thereby. The data relevant to the mobile terminals may include identification number of mobile subscribers, access capability, subscriber classification, intelligent service, and supplementary service and so on, for example, the intelligent service subscription information, routing information, and conditional forwarding service information of the mobile subscribers and so on.

An MSC 33 serves as a core of the network, provides a switching function and is oriented to other functional entities of the system, possesses the HLR and interface functions for a fixed network, enables a connection between a mobile subscriber and another mobile subscriber as well as a connection between a mobile subscriber and a fixed network subscriber, and further supports mobility features capability such as location registration, and other network functions, which is the common sense for persons skilled in the art. In an embodiment of the present invention, the MSC 33 includes two types of VMSCs for the calling party and the called party respectively. The VMSCs respectively cooperate with the subscribed ORCCF intelligent service to complete the call control functions. The specific embodiment has been described above in detail and will not be repeatedly described.

A VLR 33, with functions integrally implemented in the MSC, serves for the mobile subscribers within the control area thereof, and stores information relevant to the registered mobile subscribers that enter the control area so as to provide a prerequisite to establish call connections for the registered mobile subscribers. The VLR 33 obtains necessary data from the HLR and stores the data. Once a mobile subscriber leaves the control area of this VLR, it re-registers in another VLR. Therefore, the VLR is used as a dynamic subscriber database. In an embodiment of the present invention, the main function of the VLR is to obtain the routing information, intelligent service subscription information, or conditional call forwarding service information of the called party from the HLR.

An SSP 33 is responsible for completing a switching function relevant to the intelligent service. For example, in an embodiment of the present invention, the SSP is adapted to trigger an MO or MT procedure of the ORCCF intelligent service and is generally configured in the MSC 33.

A gateway (GMSC) 34 provides interfaces for interconnecting with the fixed network and other networks. As for a call originated by a fixed network subscriber to a mobile subscriber, the GMSC 34 is responsible for obtaining location information of the called mobile subscriber, and transferring the call to the VMCS of the called mobile subscriber. The GMSC 34 may be further configured with an SSP therein, which has the same function as the SSP 33.

An international gateway (INGW) 37 is gateway equipment deployed between different countries. If the called mobile subscriber roams into a foreign country, the international routing thereof needs to be implemented through the INGW 37.

A fixed terminal 35 is a terminal of a fixed network such as a PSTN, an ISDN, and the like.

Mobile terminals 36 are user equipments used in the mobile communication network, which are the only equipment that can be directly contacted by the subscribers in the whole mobile communication network.

In FIG. 3, if the called mobile subscriber roams into the VPLMN shown in the figure, there is also a VMSC in the VPLMN adapted to process the call for the called mobile subscriber, which is not shown in FIG. 3.

The intelligent network 31, MSC 33, HLR 32 and GMSC 34 shown in FIG. 3 may be taken as a preferred embodiment of the system provided by the present invention. The functions of the GMSC 34 are equivalent to the VMCS of the calling party located in the fixed network, and the functions of the MSC 33 are equivalent to the VMCS of the called party.

Then, a method for implementing conditional call forwarding according to an embodiment of the present invention is illustrated. FIG. 4 is a flow chart of the method. Before the flow begins, a mobile terminal subscribes an ORCCF intelligent service in advance.

The flow chart shown in FIG. 4 includes the following steps.

In Step 401, when it is determined that a called party satisfies a call forwarding condition, the ORCCF intelligent service determines that cross-network roaming of the called party occurs.

In Step 402, a speech path established between a calling party and the called party is released, and a call is forwarded to a forwarded-to-number of the called party from the calling party.

In the method for implementing conditional call forwarding according to an embodiment of the present invention, the mobile terminal subscribes the ORCCF intelligent service. When it is determined that the called party satisfies the call forwarding condition, the ORCCF intelligent service determines that cross-network roaming of the called party occurs. The speech path established between the calling party and the called party is released. The call is forwarded to the forwarded-to-number of the called party from the calling party. Therefore, the call is prevented from being directly routed to the forwarded-to-number when the called party satisfies the forwarding condition, so that the cross-network speech path detour for the cross-network roaming of the called party is avoided during the call forwarding, and no roaming fee is charged, thereby the economic burden of the subscribers is alleviated.

As mentioned above, the mobile terminal subscribes the ORCCF intelligent service, which may particularly indicate that an MO procedure and an MT procedure of the mobile terminal subscribe the ORCCF intelligent service. Several preferred embodiments of the method for implementing conditional call forwarding according to an embodiment of the present invention are respectively described below in detail directed to different application scenarios. All the preferred embodiments take international roaming as a specific example of the cross-network roaming.

### Preferred Embodiment 1

An application scenario is assumed as follows. A subscriber A is a fixed network subscriber or a mobile terminal that does not apply a conditional call forwarding service. The subscriber A as a calling subscriber makes a call to a mobile terminal subscriber B who has applied the conditional call forwarding service. The subscriber B is in an international roaming state and is also busy, no reply, or not reachable currently. A subscriber C is a forwarding subscriber of the subscriber B and is located in domestic areas. The subscribers A, B, and C correspond to a VMSCa, a VMSCb and a VMSCc respectively. A home location register (HLR) of the subscriber B is represented by HLRb.

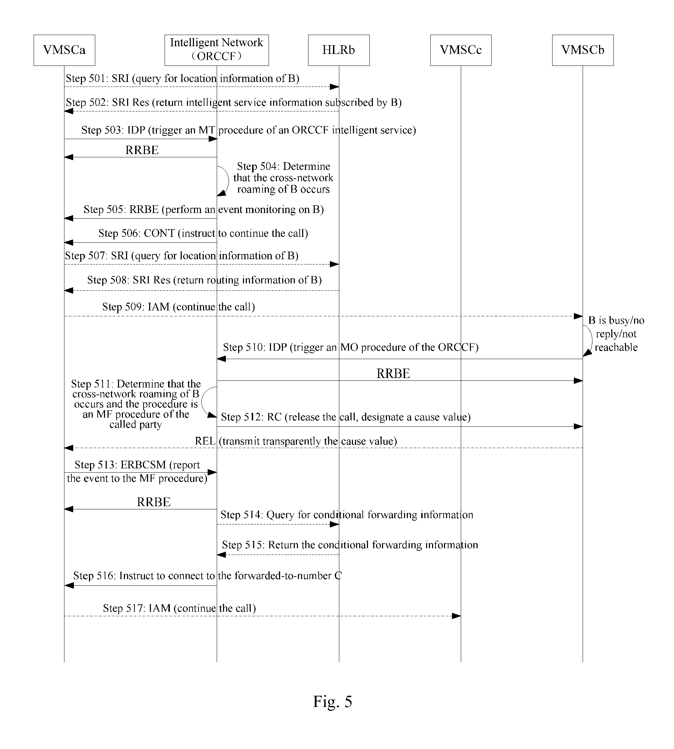

FIG. 5 is a flow chart of a method for implementing conditional call forwarding according to a first preferred embodiment of the present invention. Solid arrows indicate CAMEL application part (CAP) protocol interfaces, dash arrows indicate MAP protocol interfaces, and dot-and-dash arrows indicate ISUP protocol interfaces. It is a common sense for persons skilled in the art that SRI, IDP, RRBE, CONT and the like shown in the figure are standard signaling for the above protocol interfaces, which will not be illustrated here repeatedly. The flow shown in FIG. 5 includes the following steps.

In Step 501 to Step 503, the VMSCa queries for location information of the called party from the HLRb, the HLRb returns intelligent service subscription information of the subscriber B, and the VMSCa triggers an MT procedure of an ORCCF service. In these steps, if a calling party is located in a fixed network, the VMSCa may be replaced by a GMSC with the functions maintained to be unchanged.

In Step 504 to Step 506, in the MT procedure, the ORCCF service determines that the subscriber B is in an international roaming state, performs an event monitoring on the subscriber B, and instructs the VMSCa to continue making a call, and then the MT procedure is in a suspension state.

In Step 507 to Step 509, the VMSCa queries for the location information of the called party from the HLRb, and routes the call to the VMSCb.

In Step 510, the VMSCb pages the subscriber B, and then triggers an MO procedure of the ORCCF intelligent service when the subscriber B is busy, no reply or not reachable. This procedure is a mobile forwarded (MF) procedure.

In Step 511 to Step 512, in the MO procedure, the ORCCF intelligent service determines that the subscriber B is in the international roaming state, and the MO procedure is an MF procedure of the called party. Then, the ORCCF intelligent service instructs the VMSCb to release the call and designates a cause value for releasing the call. The cause value corresponds to the cause value for triggering the MF procedure of the called party, i.e., the subscriber B is busy, no reply, or unknot reachable. The VMSCb releases a speech path from the VMSCb to the VMSCa, and transparently transmits the designated cause value to the VMSCa.

In Step 513, the VMSCa reports the received cause value to the MT procedure of the ORCCF, and the flow is in a suspension state after Step 503 to Step 506.

In Step 514 to Step 515, in the MT procedure, the ORCCF intelligent service queries for conditional forwarding service information from the HLRb, and obtains a forwarded-to-number of the forwarding subscriber C corresponding to the subscriber B from the conditional forwarding service information returned by the HLRb.

In Step 516, the ORCCF intelligent service instructs the VMSCa to forward the call to the subscriber B to the forwarded-to-number of the forwarding subscriber C, and the MT service procedure ends.

In Step 517, the VMSCa routes the call to the VMSCc corresponding to the subscriber C.

### Preferred Embodiment 2

An application scenario is assumed as follows. A subscriber A is a mobile terminal that has applied a conditional call forwarding service. The subscriber A as a calling party makes a call to a mobile terminal subscriber B who has applied the conditional call forwarding service. Currently, the subscriber B is in an international roaming state, and is busy, no reply, or not reachable. A subscriber C is a forwarding subscriber of the subscriber B and is located in domestic areas. The subscribers A, B, and C correspond to VMSCa, VMSCb, and VMSCc respectively. A home location register of the subscriber B is represented by HLRb.

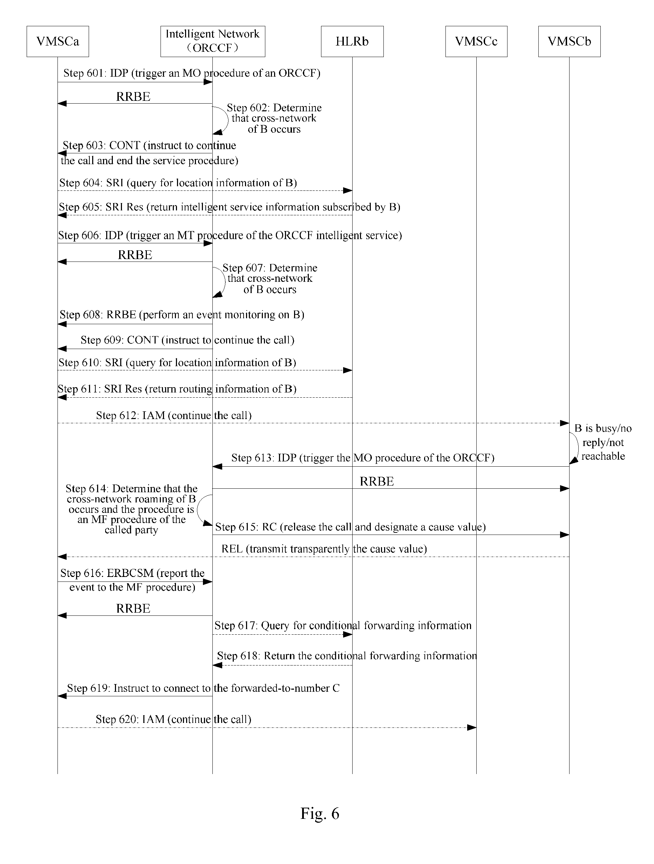

FIG. 6 is a flow chart of a method for implementing conditional call forwarding according to a second preferred embodiment of the present invention. The meanings of various arrows and the signaling shown in FIG. 6 are the same as those shown in FIG. 5. The flow shown in FIG. 6 includes the following steps.

In Step 601, when the subscriber A acts as the calling subscriber and originates a call, the VMSCa triggers an MO procedure of an ORCCF intelligent service.

In Step 602 to Step 603, in the MO procedure, the ORCCF intelligent service determines that the procedure is an MO procedure of the calling subscriber, and instructs the VMSCa to continue the call and the MO service procedure ends.

Steps 604 to 620 are identical to Steps 501 to 517 and will not be described herein again.

The application scenarios of both the above Preferred Embodiment 1 and Preferred Embodiment 2 are that the called subscriber is in the international roaming state. It can be seen that, if the MO procedure is triggered by the calling subscriber, the ORCCF intelligent service instructs the VMSCa to continue the call, and then the MO procedure ends, as shown in the Preferred Embodiment 2; whereas if the MO procedure, i.e., the described MF procedure, is triggered by the called subscriber, as shown in Preferred Embodiment 1, the ORCCF intelligent service continues the operation of Step 511 to Step 517.

### Preferred Embodiment 3

An application scenario is assumed as follows. A subscriber A is a fixed network subscriber or a mobile terminal that does not apply a conditional call forwarding service. The subscriber A as a calling subscriber makes a call to a mobile terminal subscriber B who has applied the conditional call forwarding service. Currently, the subscriber B is not in an international roaming state, but is busy, no reply or not reachable. A subscriber C is a forwarding subscriber of the subscriber B and is located in domestic areas. The subscribers A, B, and C correspond to VMSCa, VMSCb, and VMSCc respectively. A home location register of the subscriber B is represented by HLRb.

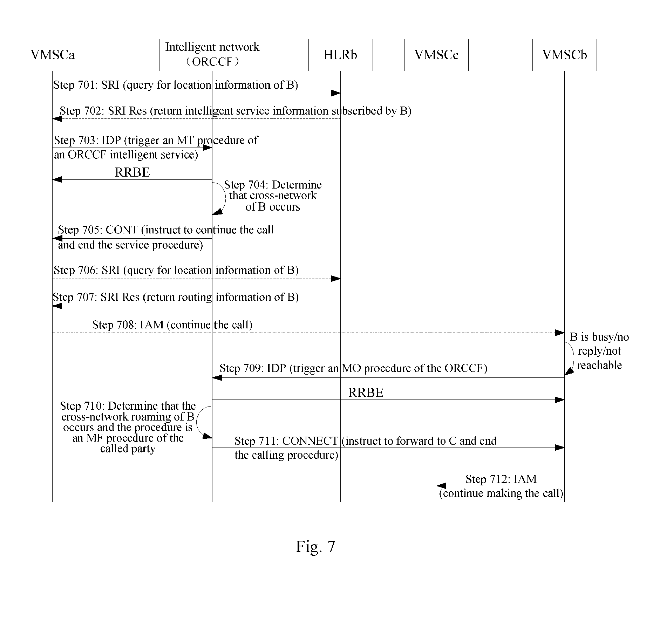

FIG. 7 is a flow chart of a method for implementing conditional call forwarding according to a third preferred embodiment of the present invention. The meanings of various arrows and the signaling shown in FIG. 7 are the same as those shown in FIG. 5. The flow shown in FIG. 7 includes the following steps.

In Step 701 to Step 703, the VMSCa queries for location information of the called party from the HLRb, the HLRb returns intelligent service information subscribed by the called subscriber B, and then the VMSCa triggers an MT procedure of an ORCCF intelligent service.

In Step 704 to Step 705, in the MT procedure, the ORCCF intelligent service determines that the subscriber B is not in an international roaming state and instructs the VMSCa to continue the call, and the MT procedure ends.

In Step 706 to Step 708, the VMSCa queries for the location information of the called party from the HLRb, and routes the call to the VMSCb currently corresponding to the subscriber B.

In Step 709, the VMSCb pages the subscriber B, and then triggers an MO procedure of the ORCCF intelligent service when the subscriber B is busy, no reply, or not reachable, which may also be referred to as an MF procedure. In this procedure, the VMSCb reports information to the ORCCF intelligent service. The information includes a forwarded-to-number of the forwarding subscriber C corresponding to the subscriber B.

In Step 710 to Step 711, the ORCCF intelligent service determines that the subscriber B is not in the international roaming state and it is in an MF procedure of the called party, and then obtains the forwarded-to-number from the information reported by the VMSCb and instructs the VMSCb to forward the call to the subscriber C, and the MO procedure ends.

In Step 712, the VMSCb routes the call to the VMSCc currently corresponding to the subscriber C.

The application scenario of the above Preferred Embodiment 3 is that the called subscriber is not in the international roaming state. It can be seen that, both the MO procedure and the MT procedure of the subscriber subscribe the ORCCF intelligent service procedure, so the intelligent service is to be triggered no matter whether the subscriber is in the international roaming state or not. In this preferred embodiment, when the called subscriber is not in the international roaming state, in the MT procedure, the event monitoring is not be performed on the called subscriber and the calling subscriber is instructed to continue the call, and the MT procedure ends; in the MF procedure of the called party, the ORCCF intelligent service obtains the forwarded-to-number and instructs the called subscriber to forward the call to the forwarded-to-number, and the MT procedure ends.

There is still another embodiment aiming at the above case when the subscriber is not in the international roaming state. When the VMSCa queries for the location information of the called party from the HLRb, if the HLRb determines that the called subscriber is not in the international roaming state, the HLRb cancels the service subscription information and returns directly routing information of the called subscriber to the VMSCa. In this way, the intelligent service can be prevented from being triggered when the subscriber is not in the international roaming state, so as to reduce the impact of the CAP signaling on the network. Moreover, when the called subscriber updates its location, the subscription information of the called subscriber is not synchronized to the VMSCb, if the called subscriber is not in the international roaming state.

In the above several preferred embodiments of the method in the embodiment of the present invention, in the signaling description, standard MAP protocol interfaces are used to query for conditional call forwarding service information from the HLRb, and other private interfaces agreed by both parties may also be used. In addition, if the MO procedure of the mobile subscriber who has applied the conditional call forwarding has subscribed an intelligent service other than the ORCCF, the MO procedure of the existing intelligent service may be modified with reference to the MO procedure in the ORCCF intelligent service illustrated above, so as to implement the conditional call forwarding. If the MT procedure of the mobile subscriber who has applied the conditional call forwarding has subscribed an intelligent service other than the ORCCF, the MT procedure of the existing intelligent service may be modified with reference to the MT procedure in the ORCCF intelligent service illustrated above, so as to implement the conditional call forwarding. Similarly, if both the MO procedure and MT procedure of the mobile subscriber who has applied the conditional call forwarding have subscribed an intelligent service other than the ORCCF, the MO procedure and MT procedure of the existing intelligent service may be modified with reference to the MO procedure and MT procedure in the ORCCF intelligent service illustrated above, so as to implement the conditional call forwarding.

The above descriptions are merely directed to the preferred embodiments of the present invention, which are not intended to limit the scope of present invention. It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A method for implementing conditional call forwarding, comprising:
determining, by an optimal routing at conditional call forwarding (ORCCF) intelligent service subscribed by a mobile terminal, that cross-network roaming of a called party occurs currently, when determining that the called party satisfies a call forwarding condition; and
releasing a speech path established between a calling party and the called party, and forwarding a call to a forwarded-to-number of the called party from the calling party.

2. The method according to claim 1, wherein the an ORCCF intelligent service subscribed by a mobile terminal comprises the ORCCF intelligent service subscribed by a mobile originated (MO) procedure and a mobile terminated (MT) procedure of the mobile terminal.

3. The method according to claim 2, wherein the calling party is a fixed network terminal or a mobile terminal that does not subscribe the ORCCF intelligent service, and the called party is a mobile terminal that subscribes the ORCCF intelligent service;
before the determining that the called party satisfies a call forwarding condition, the method further comprises:
triggering, by a visited mobile switching center (VMSC) of the calling party, the MT procedure of the ORCCF; judging, by the ORCCF intelligent service, that the cross-network roaming of the called party occurs, performing an event monitoring on the called party, and instructing the VMSC of the calling party to continue the call; and the MT procedure being in a suspension state; and
routing, by the VMSC of the calling party, the call to a VMSC of the called party.

4. The method according to claim 2, wherein both the calling party and the called party are mobile terminals that subscribe the ORCCF intelligent service;
before the determining that the called party satisfies a call forwarding condition, the method further comprises:
triggering, by a VMSC of the calling party, the MO procedure of the ORCCF intelligent service; determining, by the ORCCF intelligent service, that the procedure is the MO procedure of the calling party, and instructing the VMSC of the calling party to continue the call; and ending the MO procedure;
triggering, by the VMSC of the calling party, the MT procedure of the ORCCF; judging, by the ORCCF intelligent service, that the cross-network roaming of the called party occurs, performing an event monitoring on the called party, and instructing the VMSC of the calling party to continue the call; and the MT procedure being in a suspension state; and
routing, by the VMSC of the calling party, the call to a VMSC of the called party.

5. The method according to claim 3 or 4, wherein between the determining that the called party satisfies a call forwarding condition and the determining, by the subscribed ORCCF intelligent service, that cross-network roaming of a called party occurs currently, the method further comprises: triggering, by the VMSC of the called party, the MO procedure.

6. The method according to claim 3 or 4, wherein the triggering, by a VMSC of the calling party, the MT procedure of the ORCCF further comprises: querying, by the VMSC of the calling party, for location information of the called party from a home location register (HLR) of the called party, receiving intelligent service information subscribed by the called party returned by the HLR, and triggering the MT procedure of the ORCCF.

7. The method according to claim 3 or 4, wherein between the determining, by the subscribed ORCCF intelligent service, that cross-network roaming of a called party occurs currently and the releasing a speech path established between a calling party and the called party, the method further comprises: instructing, by the ORCCF intelligent service, the VMSC of the called party to release the call, designating a cause value for releasing the call, and transmitting transparently the cause value to the VMSC of the calling party.

8. The method according to claim 7, wherein the forwarding a call to a forwarded-to-number from the calling party further comprises: in the MT procedure, querying, by the ORCCF intelligent service, for conditional call forwarding information of the called party from the HLR; obtaining the forwarded-to-number from the information; and forwarding the call from the calling party to the called party to a VMSC corresponding to the forwarded-to-number from the VMSC of the calling party.

9. The method according to claim 8, wherein between the releasing a speech path established between a calling party and the called party and the querying, by the ORCCF intelligent service, for conditional call forwarding information of the called party, the method further comprises: reporting, by the VMSC of the calling party, the cause value to the MT procedure.

10. The method according to claim 2, wherein the calling party is a fixed network terminal or a mobile terminal that does not subscribe the ORCCF intelligent service, and the called party is a mobile terminal that subscribes the ORCCF intelligent service;
between the determining that the called party satisfies a call forwarding condition and the determining, by the ORCCF intelligent service, that cross-network roaming of a called party occurs currently, the method further comprises:
triggering, by a VMSC of the called party, the MO procedure;
judging, by the ORCCF intelligent service, whether the cross-network roaming of the called party occurs or not; and if the cross-network roaming of the called party occurs, continuing to execute the step of determining, by the ORCCF intelligent service, that the cross-network roaming of the called party occurs currently; otherwise, obtaining directly the forwarded-to-number of the called party, instructing the VMSC of the called party to forward the call to the forwarded-to-number, and ending the procedure.

11. The method according to claim 10, wherein before the determining that the called party satisfies a call forwarding condition, the method further comprises:
obtaining, by a VMSC of the calling party, subscription intelligent service information of the called party, and triggering the MT procedure of the ORCCF;
determining, by the ORCCF intelligent service, that the cross-network roaming of the called party does not occur, and instructing the VMSC of the calling party to continue the call; and ending the MT procedure; and
querying, by the VMSC of the calling party, for location information of the called party, and routing the call to the VMSC of the called party.

12. The method according to claim 10, wherein when the VMSC of the called party triggers the MO procedure, the VMSC of the called party reports conditional forwarding service information which comprises the forwarded-to-number to the ORCCF intelligent service; and
the forwarding a call to a forwarded-to-number from the calling party further comprises: obtaining, by the ORCCF intelligent service, the forwarded-to-number from the conditional forwarding service information reported by the VMSC of the called party, and forwarding the call from the calling party to the called party to a VMSC corresponding to the forwarded-to-number from a VMSC of the calling party.

13. A system for implementing conditional call forwarding, comprising:
an intelligent network, provided for a mobile terminal to subscribe an optimal routing at conditional call forwarding (ORCCF) intelligent service, and adapted to determine that cross-network roaming of a called party occurs;
a visited mobile switching center (VMSC) of the called party, adapted to determine that the called party satisfies a call forwarding condition, and release a speech path established between a calling party and the called party when the ORCCF intelligent service determines that the cross-network roaming of the called party occurs; and
a VMSC of the calling party adapted to forward a call to a forwarded-to-number of the called party after the VMSC of the called party releases the speech path established between the calling party and the called party.

14. A visited mobile switching center (VMSC), comprising:
a first SSP, adapted to trigger a mobile terminated (MT) procedure or a mobile originated (MO) procedure of an optimal routing at conditional call forwarding (ORCCF) intelligent service according to intelligent service subscription information received by a visitor location register (VLR);
a VLR, adapted to query for location information of a called party from a home location register (HLR) and receive routing information, the intelligent service subscription information, or conditional forwarding service information of the called party returned by the HLR; and
a first execution module, adapted to route a call to a VMSC of the called party according to the routing information of the called party received by the VLR, and forward the call to a VMSC of a forwarded-to-number of the called party, after the VMSC of the called party releases a speech path established between the calling party and the called party, according to the conditional forwarding service information of the called party received by the VLR.

15. A visited mobile switching center (VMSC), comprising:
a second SSP, adapted to trigger a mobile originated (MO) procedure of an optimal routing at conditional call forwarding (ORCCF) intelligent service and receive an instruction about releasing a call from the ORCCF intelligent service ; and
a second execution module, adapted to release the call from a calling party to a called party according to the instruction about releasing the call received by the second SSP and determine that the called party satisfies a call forwarding condition.
